# DEMANDE DE BREVET EUROPEEN

(11) **EP 2 065 840 A1**
(43) Date de publication de la demande: **03.06.2009**
(21) Numéro de dépôt: 07121184.1
(22) Date de dépôt: 21.11.2007
(51) Int. Cl.: G06K 19/077, G06K 19/04

(54) **Dispositif de communication formé d'une unité électronique et d'une bobine-antenne**

(71) Demandeur: EM Microelectronic-Marin SA, 2074 Marin (CH)
(72) Inventeur: De Lambilly, Hervé, 2000 Neuchâtel (CH); Kayal, Abdul-Hamid, 2000 Neuchâtel (CH); Thanawatana, Atireklapvarodom, Pathumthani (TH)
(74) Mandataire: Surmely, Gérard

(57) **Abrégé**

Le dispositif de communication (2) comprend un support (4) commun à une bobine-antenne (10) et à une unité électronique (16) agencée sur un méplat (14) de ce support ou dans une cavité prévue dans ce support. Le support présente dans une variante particulière une forme générale cylindrique. L'unité électronique est agencée de manière à être située substantiellement à l'intérieur de la surface générale cylindrique du support. Deux gorges de guidage (30, 32) sont prévues entre le corps de la bobine et l'unité électronique. Ces gorges sont prévues écartées l'une de l'autre pour permettre d'agencer obliquement les deux extrémités (34, 36) de la bobine lors du procédé de fabrication du dispositif. En particulier, le fond des deux gorges est situé sensiblement au niveau de la surface des plages de contact ou légèrement en dessous, ces plages de contact étant situées en dessous du point supérieur du corps de la bobine en projection dans un plan perpendiculaire à son axe central (6).

## Description

### Domaine technique

La présente invention concerne un dispositif de communication par ondes électromagnétiques comprenant une unité électronique munie de deux plages de contact externes, une bobine formant antenne et dont les deux extrémités sont reliées respectivement aux deux plages de contact externes, et un support autour d'une première partie duquel est enroulée la bobine.

### Arrière-plan technologique

Des dispositifs de communication peuvent notamment former des transpondeurs ou autres unités RFID. De tels dispositifs de communication sont généralement prévus pour être associés à un objet ou un appareil quelconque. Grace à un tel dispositif de communication, on peut soit identifier l'objet ou l'appareil, soit lire des données relatives à divers paramètres d'utilisation de l'objet ou de l'appareil, soit encore écrire dans l'unité électronique certaines données relatives à l'usage de l'objet ou à des modes d'utilisation de l'appareil. A titre d'exemple non limitatif, le dispositif de communication selon l'invention est associé à une brosse à dent électrique. Les brosses à dent électriques sont généralement des appareils relativement complexes qui doivent présenter de faibles dimensions. Les divers éléments constitutifs sont donc conçus précisément de manière à occuper un moindre espace tout en étant fonctionnels. De manière à pouvoir agencer une bobine ayant un diamètre relativement grand par rapport au diamètre de l'appareil, il est prévu dans un mode de réalisation d'un tel appareil d'agencer une bobine-antenne sur un support de forme externe sensiblement circulaire et présentant un évidement intérieur pour le passage d'éléments mécaniques et éventuellement électriques reliant la brosse terminale au moteur de cette brosse à dent électrique. Pour des raisons pratiques et également pour permettre un agencement relativement aisé de l'ensemble formé de l'unité électronique et de la bobine, l'homme du métier cherche à agencer cette unité électronique, en particulier un circuit intégré présentant deux plages de contact externes, à proximité de la bobine. Deux problèmes particuliers se posent à l'homme du métier pour la conception et la fabrication de dispositifs de communication du type décrit ici. Premièrement la forme sensiblement cylindrique du support d'antenne fait généralement partie d'une pièce en matériau injecté dont les dimensions externes sont ajustées précisément aux dimensions d'un passage sensiblement circulaire prévu à l'intérieur de l'objet ou de l'appareil, en particulier d'une brosse à dent électrique. Le deuxième problème concerne la fixation, notamment par soudage ou thermocompression des deux extrémités de la bobine à l'unité électronique. II est connu de former une bobine sur un support en laissant les deux extrémités de cette bobine libre. Ensuite, notamment de manière manuelle, ces deux extrémités sont placées en regard des deux contacts externes de l'unité électronique et sont fixées à ces derniers par une soudure à l'étain. Une telle opération est délicate et nécessite un personnel qualifié. L'automatisation d'un tel procédé n'est guère envisageable.

On connaît du document US 5,572,410 un procédé de fabrication d'unités électroniques RFID formées d'une bobine enroulée sur un noyau ou sans support, c'est-à-dire autoporteuse, et d'un circuit intégré à deux plages externes duquel les extrémités de la bobine sont reliées. Dans ce document, il est prévu que le circuit intégré soit relié mécaniquement à la bobine seulement par l'intermédiaire des deux extrémités de cette bobine reliée au circuit intégré. L'objet de ce document est donc différent de l'objet de la présente invention. On considérera toutefois ci-après un enseignement de ce document. Aux figures 3 et 4 de ce document est décrit un mode de mise en oeuvre particulier d'un procédé de fabrication d'une unité de communication avec une bobine autoporteuse. L'installation associée au procédé de fabrication comprend un outil de préhension du circuit intégré permettant de maintenir ce dernier dans une position prédéfinie. Elle comprend également un support permettant de former la bobine. Ce support de fabrication est agencé dans une position prédéfinie relativement à l'outil de préhension du circuit intégré. II est constitué d'un noyau central et de deux flasques ou disques de fermeture entre lesquels la bobine est formée. Le flasque du côté du circuit intégré comporte deux gorges ou encoches situées proche du point supérieur de ce flasque, bien au-dessus de l'enroulement formant le corps de la bobine. La distance entre ces deux gorges correspond à l'espacement entre les deux plages de contact externes du circuit intégré. Ces deux gorges sont donc prévues très proches l'une de l'autre, de manière à permettre aux extrémités de la bobine d'être agencées parallèlement selon la direction longitudinale des deux plages de contact, lesquelles sont parallèles à l'axe central de la bobine et du support de fabrication. Lors de la formation de la bobine, les deux extrémités de celle-ci s'étendent ainsi parallèlement l'une à l'autre au-dessus des plages de contact du circuit intégré avec une orientation selon l'axe central de la bobine. Ceci permet de souder notamment par thermocompression les deux extrémités de la bobine aux deux plages correspondantes du circuit intégré alors que les deux extrémités de la bobine sont encore tendues entre les deux gorges et une goupille de guidage centrale agencée sur l'outil de préhension du circuit intégré. Ce procédé est avantageux car il permet une automatisation du procédé de fabrication d'unités de communication, notamment du type RFID. Toutefois l'enseignement donné ici ne peut être appliqué à un dispositif de communication objet de la présente invention sans nécessiter des limitations pour la géométrie du support et pour l'intégration du dispositif dans un objet ou un appareil. Premièrement la bobine et le circuit intégré ne sont pas montés sur un support commun. Ensuite, dans le procédé décrit ci-avant, le circuit intégré est agencé au-dessus du corps de bobine; ce qui est un désavantage important dans certaines réalisations prévues dans le cadre de la présente invention, comme exposé précédemment. De plus, le circuit intégré doit être affleuré à la surface supérieure de l'outil de préhension ou avoir sa face supérieure au-dessus de cette surface pour permettre d'agencer les deux extrémités de la bobine entre les deux gorges du flasque et la goupille de guidage avec une orientation parallèle à l'axe central du support de bobine. On notera que dans le cas d'un soudage par thermocompression, les extrémités de la bobine peuvent être situées à une certaine distance des plages de contact du circuit intégré. Par contre pour d'autres procédés de soudage, notamment par faisceau laser sans apport de brasure, il est nécessaire que les extrémités de la bobine soient à proximité immédiate de ces plages de contact et de préférence en appui contre celles-ci.

### Résumé de l'invention

La présente invention a pour but de fournir un dispositif de communication formé d'une unité électronique reliée électriquement à une bobine et d'un support commun, l'unité électronique étant comprise à l'intérieur d'un volume géométrique défini par la forme générale dudit support.

Un autre but de la présente invention est de fournir un procédé permettant de réaliser efficacement de tels dispositifs de communication de manière automatique.

Un autre but de la présente invention est de proposer un procédé permettant de souder les extrémités de la bobine à l'unité électronique par un soudage ou un brasage sans thermocompression, notamment un soudage au laser ou un soudage électrique.

A cet effet la présente invention concerne un dispositif tel que défini à la revendication 1 annexée à la présente description de l'invention.

### Brève description des figures

Des modes de réalisation d'un dispositif de communication selon l'invention seront décrits en détail ci-après en référence aux figures, données à titre d'exemple nullement limitatif, dans lesquels :
- La figure 1 représente schématiquement le procédé de fabrication d'un premier mode de réalisation d'un dispositif de communication selon l'invention.
- La figure 2 est une vue de côté du dispositif de communication de la figure 1 lors de l'étape de connexion de la bobine à l'unité électronique intervenant au cours du procédé de fabrication de ce dispositif;
- La figure 3a est une vue en coupe selon la ligne III-III de la figure 1 et la figure 3b montre une variante de réalisation du dispositif de la figure 1;
- La figure 4 est une vue schématique de dessus du dispositif selon le premier mode de réalisation de l'invention;
- La figure 5 montre le procédé de réalisation d'un dispositif selon un deuxième mode de réalisation de l'invention; et
- La figure 6 est une vue schématique de dessus d'un dispositif de communication selon le deuxième mode de réalisation de l'invention.

### Description détaillée

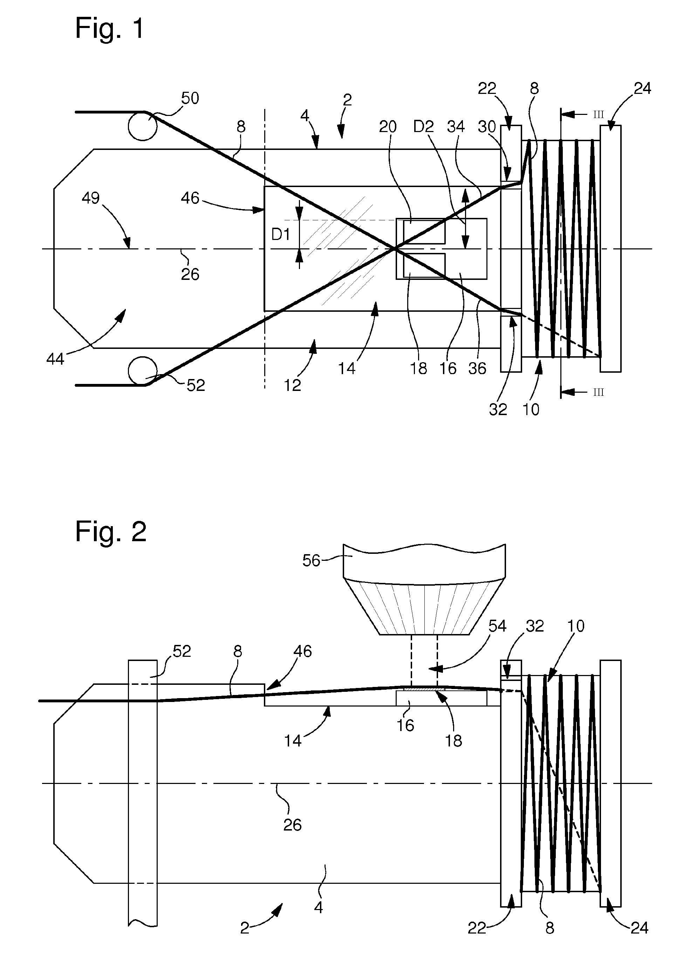

A l'aide des figures 1 à 4, on décrira ci-après un premier mode de réalisation d'un dispositif de communication selon l'invention ainsi que son procédé de fabrication.

Le dispositif de communication 2 comprend un support 4 de forme générale cylindrique et/ou tronconique. Une première partie 6 du support située à une première extrémité de celui-ci définit un noyau autour duquel est enroulé le fil électrique 8 pour former le corps d'une bobine-antenne 10. Le support 4 comprend une deuxième partie 12 de forme générale cylindrique dans le prolongement de la première partie 6. Cette deuxième partie présente un méplat 14 sur lequel est agencé une unité électronique 16 comportant deux plages de contact externes 18 et 20. Le noyau 6 présente à ses extrémités deux anneaux formant respectivement deux butées latérales circulaires 22 et 24 pour le corps de la bobine 10. L'axe central 26 de la bobine correspond à l'axe central du support 4. Ce support présente une ouverture traversante longitudinale 28 permettant l'agencement d'un objet ou le passage de moyens fonctionnels d'un appareil, en particulier d'une brosse à dent électrique.

Le support 4 comprend, entre la première partie 6 et la deuxième partie 12 deux gorges de guidage 30 et 32 du fil de bobine 8. Ces deux gorges 30 et 32 sont agencées de manière que les deux extrémités 34 et 36 de la bobine 10 sortent à un niveau inférieur au point supérieur 38 de la circonférence 40 d'une coupe transversale de la bobine relativement à un plan géométrique 48 parallèle aux deux plages de contact 18 et 20. En d'autres termes, le fond des gorges ou rainures 30 et 32 est situé à un niveau inférieur au point supérieur 38 du corps de la bobine. De préférence, le fond de ces gorges est prévu sensiblement au niveau des contacts 18 et 20 de l'unité électronique 16 ou légèrement en dessous de celles-ci.

On remarquera que l'unité électronique peut être formée d'un circuit intégré présentant deux plots de contact à sa surface ou être formée par un circuit intégré enrobé, cet enrobage définissant une sorte de boîtier à la face supérieure duquel sont agencés les deux contacts externes. On notera également que cette unité électronique peut être agencée dans une cavité prévue dans la deuxième partie du support. Dans ce dernier cas, les plages de contact et le support sont agencés de manière à permettre aux extrémités de la bobine d'être tendus au-dessus des plages de contact de l'unité électronique et de préférence contre celles-ci.

Le support 4 comprend une troisième partie 44 dans le prolongement de la deuxième partie 12. Cette troisième partie présente une paroi 46 qui s'élève à l'extrémité du méplat 14. Elle est notamment de forme cylindrique ou tronconique. Dans une variante particulière, les première, deuxième et troisième parties définissent ensemble un cylindre dont une partie est sectionnée pour former le méplat 14 sur lequel est agencée l'unité électronique 16. De préférence, cette unité électronique est située substantiellement à l'intérieur de la surface géométrique cylindrique définie par le support 4. Elle ne fait donc pas saillie hors de cette surface géométrique de sorte que le dispositif de communication selon l'invention peut être introduit dans une ouverture cylindrique ajustée au diamètre du support 4. Ceci est un avantage majeur du dispositif selon l'invention.

Pour réaliser le dispositif 2, il est prévu dans le cadre de la présente invention un procédé de fabrication permettant une production automatisée et l'utilisation d'une technique de soudage des extrémités de la bobine à l'unité électronique autre qu'une thermocompression où une lame descend premièrement le fil électrique 8 contre les plages de contact 18 et 20 pour ensuite les souder à ces contacts par pression et apport de chaleur. Cependant, un soudage par thermocompression est aussi prévu dans une variante de la présente invention.

Un mode de mise en oeuvre du procédé selon l'invention est représenté aux figures 1 et 2. Le support 4 est maintenu dans une installation de bobinage dans laquelle le fil électrique 8 est apporté d'un côté de ce support selon une direction définie par une goupille de guidage 50. Le fil 8 est tendu entre cette goupille et la gorge 32 située de l'autre côté du plan médian 49 du dispositif 2 perpendiculaire au méplat 14. De préférence, il est prévu que le fil 8 entre latéralement au-dessus du méplat 14. Ainsi, comme cela est représenté à la figure 2, le fil 8 tendu dans l'installation de bobinage peut être directement en appui contre la plage de contact 18 qu'il traverse. Ceci est rendu possible par le fait que le fil passe dans la gorge 32 dont le fond est situé sensiblement au niveau des plages de contact de l'unité électronique ou légèrement en dessous, comme représenté à la figure 2. Le fait d'agencer le fil 8 en diagonal relativement à l'axe central 26, c'est-à-dire de biais ou décaler angulairement relativement à cet axe central 26 en projection dans un plan géométrique 48 parallèle aux plages de contact et au méplat, et le fait de prévoir les gorges de guidage 30 et 32 avec un écartement supérieur à la largeur de l'unité électronique permet de tendre chaque extrémité de la bobine contre la plage de contact qu'elle traverse alors que cette unité électronique est située à l'intérieur de l'enveloppe cylindrique définie par la forme générale du support 4 ou, de manière générale, à l'intérieur de la circonférence 40 d'une coupe transversale de la bobine en projection selon la direction de l'axe central 26.

Après avoir tendu le fil 8 entre la goupille 50 et la rainure 32, le corps de la bobine est formé sur le noyau 6 et le fil 8 passe ensuite dans la gorge 30 de laquelle elle sort à nouveau selon une orientation en biais, c'est-à-dire obliquement par rapport à l'axe central 26, en direction de la goupille de guidage 52 agencée de l'autre côté de la rainure 30 relativement audit plan médian 49. Le fil électrique forme ainsi au-dessus du méplat 14 une croix en projection dans le plan géométrique 48 parallèle aux plages 18 et 20 de l'unité électronique 16, comme représenté à la figure 1. Ainsi, selon une caractéristique particulière de l'invention, chaque gorge 30, respectivement 32 est située à une distance D2 de l'axe central 26, en projection dans ledit plan géométrique 48 parallèle aux deux plages de contact de l'unité électronique (correspondant au plan de la figure 1), qui est supérieure à la distance correspondante D1 entre cet axe central 26 et le point le plus éloigné de la plage de contact 20, respectivement 18 qui est reliée électriquement au fil 8 passant dans la gorge concernée. En d'autres termes, la distance D2 de la gorge au plan médian 49 est supérieure à la distance D1 du point le plus éloigné de la plage de contact susmentionnée à ce plan médian.

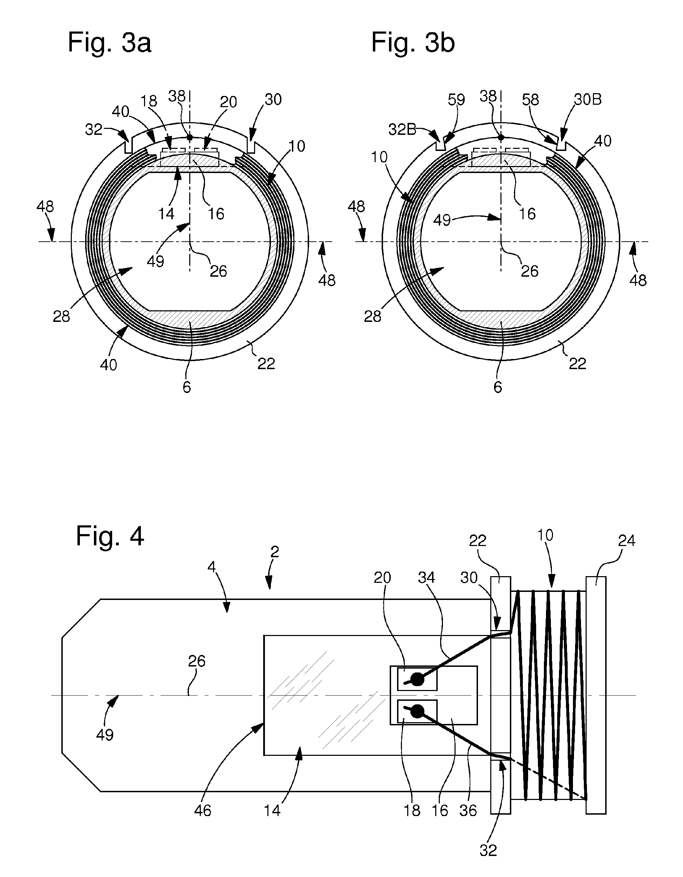

Finalement, les extrémités 34 et 36 de la bobine sont soudées respectivement aux deux plages de contact de l'unité électronique par des moyens connus de l'homme du métier, notamment par un soudage au laser ou par une décharge électrique. Dans une autre variante, il est possible de prévoir le soudage des extrémités par thermocompression et/ou brasage (c'est-à-dire avec l'apport d'une brasure, notamment de l'étain, qui peut être apportée lors du soudage ou être prédéposée à la surface des plages de contact 18 et 20). A la figure 2 est représenté schématiquement un soudage par un faisceau laser 54 fourni par une tête de soudage 56. Le fil 8 est ensuite sectionné et on obtient un dispositif de communication selon l'invention tel que représenté schématiquement à la figure 4. Le mode de réalisation du dispositif 2 de la figure 4 se caractérise donc en particulier en ce qu'il comprend deux gorges 30 et 32 situées, en projection dans un plan géométrique parallèle aux plages de contact de l'unité électronique, respectivement de part et d'autre d'un point supérieur 38 (relativement au méplat 14 ou au plan géométrique 48) de la circonférence 40 d'une coupe transversale du corps de bobine 10, et en ce que chaque gorge est située à une distance d'un plan médian 49, passant par l'axe central 26, qui est supérieure à la distance entre ce plan médian et le point le plus éloigné de la plage de contact reliée à l'extrémité de la bobine qui traverse cette gorge.

Ainsi, les deux extrémités 34 et 36 de la bobine sortent obliquement des deux gorges respectives, relativement à l'axe central 26 en projection dans un plan parallèle aux plages de contact de l'unité électronique 16. Les deux extrémités 34 et 36 convergent l'une vers l'autre entre les gorges respectives et ces plages de contact.

A la figure 3B est représentée une variante de réalisation du dispositif 2. La variante de la figure 3B se distingue de celle de la figure 3A par le fait que les deux gorges 30B et 32B prévues dans l'anneau circulaire 22 du support 4 présente chacune une paroi interne 58, respectivement 59 orientée obliquement en direction de l'axe central 26. Ceci permet de garantir que le fil de la bobine demeure dans les gorges de guidage, au moins lors du procédé de fabrication du dispositif de communication selon l'invention. D'autres profils peuvent être prévus pour ces gorges de guidage. On remarquera que le fil de la bobine passant dans les gorges n'a pas été représenté aux figures 3A et 3B pour des raisons de clarté du dessin.

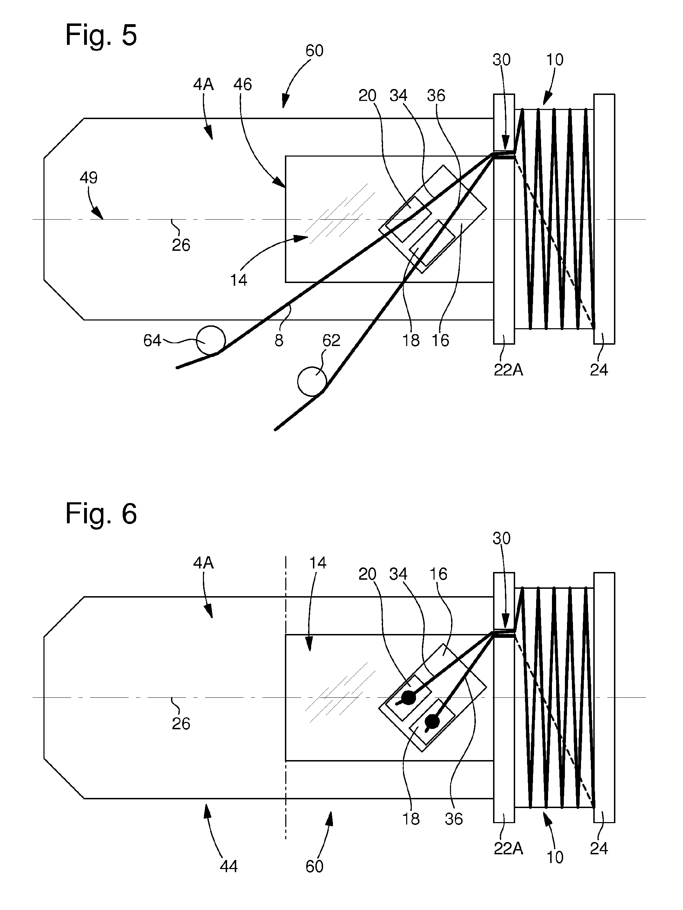

Aux figures 5 et 6 est représenté un deuxième mode de réalisation d'un dispositif de communication selon l'invention, ainsi que son procédé de fabrication. Les références déjà décrites précédemment ne seront pas toutes à nouveau décrites ici.

Le support 4A du dispositif de communication 60 diffère du support 4 du mode de réalisation des figures précédentes seulement par le fait qu'il comprend une seule gorge ou rainure 30 agencée dans l'anneau circulaire 22A séparant le noyau autour duquel le corps de la bobine 10 est enroulé et le méplat 14 sur lequel l'unité électronique 16 est agencée. Ce mode de réalisation se caractérise par le fait que l'unité électronique 16 est agencée de biais, c'est-à-dire avec ses plages de contact 18 et 20 orientées selon une direction décalée angulairement relativement à l'axe central 26 en projection dans un plan géométrique parallèle aux plages de contact et également à la surface plane 14 du support 4A définissant un méplat. On notera que dans ce deuxième mode de réalisation, l'unité électronique 16 peut également être agencée, dans une variante, à l'intérieur d'une cavité prévue dans le support 4A pour autant que l'agencement permette de tendre le fil électrique 8 au-dessus des contacts 18 et 20, à faible distance de ceux-ci et de préférence en appui contre ces contacts pour permettre un soudage sans exercer une pression sur le fil tendu.

Dans le procédé de fabrication de ce deuxième mode de réalisation de l'invention, le fil 8 est apporté latéralement, c'est-à-dire selon une direction diagonale ou oblique relativement à l'axe central 26 dans une projection correspondante au plan de la figure 5. Le fil 8 est tendu entre une première goupille de guidage 62 et la gorge 30 de manière à traverser la première plage de contact 18. Le fil passe dans la gorge 30 et le corps de la bobine 10 est formé autour du noyau définissant une première partie du support 4A. Ensuite, le fil 8 passe à nouveau dans la gorge 30 et sort de cette gorge 30 selon une direction diagonale ou oblique en direction de la deuxième goupille de guidage 64 disposée de l'autre côté du support 4A relativement à la gorge 30, c'est-à-dire du même côté que la goupille 62. Dans ce deuxième mode de réalisation, les extrémités de la bobine 34 et 36 divergent l'une de l'autre depuis la gorge 30 en direction des plages 18 et 20 de l'unité électronique 16, contrairement au premier mode de réalisation où ces extrémités convergeaient l'une en direction de l'autre. Ainsi, ce deuxième mode de réalisation se caractérise en ce qu'il comprend une unique gorge 30 servant au guidage du fil de bobine, et en ce que les deux extrémités 34 et 36 de cette bobine passent dans cette unique gorge et sortent obliquement de celle-ci, relativement à l'axe central 26 en projection dans un plan parallèle au contact 18 et 20, en direction de cet axe central et en divergeant l'une de l'autre. Après avoir soudé les extrémités aux contacts respectifs de l'unité électronique 16, le fil 8 est sectionné et l'on obtient le dispositif de communication représenté schématiquement à la figure 6. On remarquera que la gorge 30 peut dans une variante présenter un profil similaire à la gorge 30B de la variante décrite à la figure 3b.

On remarquera que diverses variantes sont envisageables. En particulier, il n'est pas obligatoire dans le deuxième mode de réalisation que l'unité électronique 16 soit agencée de biais. En effet cette unité peut être orientée selon l'axe central 26. Les deux plages de contact externes 18 et 20 peuvent être décalées l'une relativement à l'autre. On notera qu'une extrémité peut éventuellement passer sur les deux contacts mais être reliée électriquement par soudage seulement à une seule de ces plages. En effet le fil de bobine 8 est prévu avec une gaine isolante.

Comme dans le premier mode de réalisation, la gorge 30 est située à une distance de l'axe central 26, en projection dans un plan géométrique parallèle aux plages de contact qui est supérieure à la distance correspondante, dans la même direction que la gorge unique 30, entre l'axe central 26 et le point extrême des plages de contact. Ceci permet d'agencer le fil 8 en diagonale, c'est-à-dire de manière oblique ou décalée angulairement par rapport à l'axe 26 et de permettre notamment au fil 8 de sortir latéralement du méplat 14, en amont de la surface verticale 46 de la troisième partie 44 du support 4A, lors du procédé de fabrication décrit ci-avant.

Dans un troisième mode de réalisation non représenté sur les figures, le dispositif de communication comprend deux gorges situées, en projection dans un plan géométrique parallèle aux plages de contact externes, du même côté du point supérieur 38 de la circonférence 40 d'une coupe transversale de la bobine 10. Ces deux gorges sont prévues de manière que les deux extrémités de la bobine sortent obliquement des deux gorges respectives relativement à l'axe central 26, en direction de cet axe central dans la projection susmentionnée. A cet effet, comme dans les deux modes de réalisation précédents, chacune des deux gorges est située à une distance de l'axe central dans ladite projection qui est supérieure à la distance correspondante entre cet axe central et le point le plus éloigné de la plage de contact respective, c'est-à-dire de la plage de contact reliée électriquement à l'une des extrémités passant par cette gorge concernée.

Le positionnement de l'unité électronique 16 se fait de préférence avec l'assistance d'une caméra permettant de positionner cette unité précisément relativement à la gorge ou les deux gorges prévue(s) pour guider le fil de la bobine entre le corps de celle-ci et les deux plages de contact de l'unité 16.

Finalement, on mentionnera que dans un autre mode de réalisation d'un dispositif selon l'invention, en particulier du type décrit aux figures 1 à 4, il est possible de remplacer les deux goupilles de guidage externes 50 et 52 par d'autres moyens de guidage agencés directement sur le support 4. Par exemple, on peut agencer deux rainures dans le corps cylindrique formant le support 4. Ces moyens de guidage peuvent également être prévus au niveau de la troisième partie 44, en particulier sous forme d'une encoche ou d'un petit dégagement aux deux extrémités de la paroi verticale 46 qui s'élève à une extrémité du méplat 14. Un tel mode de réalisation est particulièrement avantageux au niveau de son procédé de fabrication puisque l'ensemble des moyens de guidage du fil électrique pour positionner correctement les extrémités de la bobine relativement aux plages de contact de l'unité électronique est prévu directement sur le support du dispositif. L'installation de fabrication peut ainsi être simplifiée et l'outil de préhension du support agencé sans contrainte particulière.

## Revendications

1. Dispositif de communication (2; 60) par ondes électromagnétiques comprenant une unité électronique (16) munie de deux plages de contact externes (18; 20), une bobine (10) formant antenne, avec ses deux extrémités (36, 34) reliées respectivement aux deux plages de contact, et un support (4; 4A) autour d'une première partie (6) duquel est enroulée ladite bobine, cette première partie définissant un axe central (26) dudit dispositif de communication; **caractérisé en ce que** ladite unité électronique est agencée dans le prolongement de ladite première partie sur un méplat (14) ou dans une cavité d'une deuxième partie (12) dudit support de manière que ses deux plages de contact externes soient, en projection selon la direction dudit axe central, à l'intérieur de la circonférence (40) d'une coupe transversale de ladite bobine; et **en ce que** ledit support comprend, entre la première partie et la deuxième partie, au moins une gorge (30, 32; 30B, 23B) de guidage du fil de bobine agencée de manière que les deux extrémités de la bobine sortent de cette au moins une gorge à un niveau inférieur au point supérieur (38) de ladite circonférence de la bobine relativement à un plan géométrique (48) parallèle aux deux plages de contact.

2. Dispositif de communication selon la revendication 1, **caractérisé en ce que** ladite au moins une gorge est située à une distance (D2) dudit axe central, en projection dans ledit plan géométrique (48), qui est supérieure à la distance correspondante (D1) entre cet axe central et le point le plus éloigné de la plage de contact reliée à une extrémité de la bobine passant dans cette au moins une gorge.

3. Dispositif de communication selon la revendication 2, **caractérisé en ce qu'**il comprend deux gorges situées, en projection dans ledit plan géométrique, respectivement de part et d'autre dudit point supérieur de ladite circonférence de la bobine, les deux extrémités de la bobine sortant obliquement des deux gorges respectives, relativement audit axe central, en direction de cet axe central tout en convergeant l'une vers l'autre.

4. Dispositif de communication selon la revendication 2, **caractérisé en ce qu'**il comprend deux gorges situées, en projection dans ledit plan géométrique, du même côté dudit point supérieur de ladite circonférence de la bobine, les deux extrémités de cette bobine sortant obliquement des deux gorges respectives, relativement audit axe central, en direction de cet axe central.

5. Dispositif de communication selon la revendication 2, **caractérisé en ce qu'**il comprend une unique gorge (30) de guidage du fil de bobine, les deux extrémités de cette bobine passant dans cette unique gorge et sortant obliquement de celle-ci, relativement audit axe central, en direction de cet axe central tout en divergeant l'une de l'autre.
